# EUROPÄISCHE PATENTSCHRIFT

(11) **EP 1 082 259 B1**
(45) Veröffentlichungstag und Bekanntmachung des Hinweises auf die Patenterteilung: **19.12.2001**
(21) Anmeldenummer: 99927744.5
(22) Anmeldetag: 21.05.1999
(51) Int. Cl.: B65G 49/04, F16C 21/00, F16C 17/10, F16C 13/02, F16C 33/72

(54) **ROLLENANORDNUNG FÜR IN EINEM FLÜSSIGEN METALLBAD ZU BESCHICHTENDES BEHANDLUNGSGUT**
ROLLER ARRANGEMENT FOR A PRODUCT TO BE COATED IN A MOLTEN METAL BATH
SYSTEME DE ROULEAU POUR PRODUIT A REVETIR DANS UN BAIN METALLIQUE LIQUIDE

(30) Priorität: 28.05.1998 DE 19823854
(43) Veröffentlichungstag der Anmeldung: 14.03.2001
(73) Patentinhaber: Gimpel, Matthias, 52062 Aachen (DE); Siegmann, Eckhard, 52026 Aachen (DE)
(72) Erfinder: Gimpel, Matthias, 52062 Aachen (DE); Siegmann, Eckhard, 52026 Aachen (DE)
(74) Vertreter: Paul, Dieter-Alfred, Dipl.-Ing.
(86) Internationale Anmeldenummer: EP9903502
(87) Internationale Veröffentlichungsnummer: WO9961356

(56) Entgegenhaltungen:
- EP-A- 0 422 799
- DE-A- 3 404 088
- DE-A- 3 940 890
- DE-C- 832 574
- US-A- 5 568 985

## Beschreibung

Die vorliegende Erfindung betrifft eine Rollenanordnung für in einem flüssigen Metallbad zu beschichtendes Behandlungsgut mit einer im Metallbad umlaufenden Rolle, die endseitig rotationsfähig an Tragarmen durch Wälzlager gehalten ist, wobei die Wälzlager in gegen das Metallbad abgedichteten Lagergehäusen angeordnet sind.

Beim Feuerverzinken, Verzinnen oder Aluminisieren werden eine oder mehrere beidseitig gelagerte Rollen in ein Metallbad eingetaucht, um das zu beschichtende Band darin zu führen. Zur Lagerung der Rollen im Metallbad werden bisher vorwiegend Gleitlager eingesetzt. Diese vollständig in das Metallbad eingetauchten Lager haben den Nachteil kurzer Standzeiten, da hohe Temperaturen, Reibung und Angriff des flüssigen Metalls starken Verschleiß an den Lageroberflächen verursachen. Der Verschleiß führt zu einem unruhigen Lauf bis hin zu kurzzeitigem Blockieren der Rolle. Ursache für den unruhigen Lauf oder eine Blokkierung der Rolle ist die Reibung am Rollenzapfen, welcher sich bei abnehmendem Durchmesser in die Lagerschale einfrißt. Festpartikel und Oberflächenbeschädigungen im Gleitbereich beschleunigen diesen Prozeß.

Aus der US-PS 5,571,328 und der EP 0 524 851 A1 sind Gleitlager bekannt, die als äußere Lagerschale Keramikplatten in keilförmiger Anordnung einsetzen. Hierdurch soll ein Einfressen des Rollenzapfens in die Lagerschale vermieden werden. Verschleißbedingte Oberflächenschäden und Partikelbelag an dem Rollenzapfen belasten allerdings die Keramikplatten mit Schlägen und können ein vorzeitiges Lagerversagen bewirken.

Aus der DE-PS 43 07 282 A1 ist eine weitere Rollenanordnung bekannt, bei der der Auftrieb einer luftgefüllten Rolle im Metallbad zur Lastreduzierung eingesetzt wird. Für die Lagerung der Rolle sind Wälzlager vorgesehen, deren Wälzkörper im flüssigen Metall umlaufen. Nachteilig an dieser Ausführungsform ist allerdings, daß durch Verschleiß- und Auflösungseffekte im Metallbad die Lagerluft zunimmt und die Maßhaltigkeit verloren geht.

In der Publikation "Antriebstechnik 34 (1995) Nr. 7" ist weiterhin ein Wälzlager für den Einsatz in einer flüssigen Zinkschmelze beschrieben, welches als Vollkeramiklager ausgeführt ist. Nachteilig bei dieser Ausführungsform ist jedoch, daß beim Einsatz im flüssigen Metall Festpartikel in die Laufbahnen eindringen können, die beim Überrollen das Keramiklager mit Schlägen belasten. Des weiteren kann die Keramik beim Ein- und Ausbau durch Schläge oder Thermoschock Schaden nehmen.

Zur Lösung der vorstehenden Probleme wird in der DE-OS 39 40 890 A1 vorgeschlagen, die Lager in geschlossenen, gegen das Schmelzbad abgedichteten Lagergehäusen anzuordnen. Die Abdichtung erfolgt durch eine Konushülse, die verschiebbar auf einer Welle gehalten ist und durch ein Federelement gegen eine am Lagergehäuse fixierte Konuswanne gedrückt wird. Im Betrieb tritt zwischen der drehenden Rolle und dem feststehenden Teil der Konusdichtung Reibung verbunden mit Abrieb auf, so daß die Anordnung nach längerem Betrieb undicht werden kann.

Aufgabe der Erfindung ist es daher, eine Rollenanordnung der eingangs beschriebenen Art so weiterzubilden, daß auch bei längerem Betrieb eine vollständige Abdichtung des Lagergehäuses gegen das Metallbad gewährleistet werden kann.

Diese Aufgabe ist erfindungsgemäß im wesentlichen dadurch gelöst, daß zur Abdichtung des Lagergehäuses gegen die Rolle an einem radial vorstehenden Absatz der Rolle und am Lagergehäuse sich quer zur Rollenachse erstreckende Dichtungsflächen ausgebildet sind, die gegeneinander oder gegen ein zwischengeschaltetes Dichtungselement gedrückt werden. Durch diese Ausgestaltung wird erreicht, daß flüssiges Metall aus dem Metallbad zwischen den Dichtungsflächen von Rollenabsatz und Lagergehäuse durchtreten muß, um in den Lagergehäuseinnenraum zu gelangen. Der zwischen den Dichtungsflächen gebildete Spalt läßt sich jedoch durch axial wirkende Anpreßdrücke sehr gut abdichten, so daß auch bei längerem Betrieb ein Eindringen von flüssigem Metall in das Lagergehäuse sicher verhindert werden kann.

Gemäß einer Ausführungsform der Erfindung ist vorgesehen, daß der radiale Absatz an dem in das Lagergehäuse eingreifenden Endabschnitt der Rolle vorgesehen ist, d.h. die Abdichtung auf der Innenseite des Lagergehäuses erfolgt. In diesem Fall mündet vorzugsweise eine Gasleitung in das Lagergehäuse, um dem Lagergehäuse unter Erzeugung eines Überdrucks Gas zuzuführen und über den Überdruck den radialen Rollenabsatz in Richtung der Dichtungsfläche des Lagergehäuses zu drücken. Die Erzeugung der Anpreßkraft im Bereich der Dichtungsflächen wird bei dieser Ausgestaltung dadurch erreicht, daß der allseitig wirkende Innendruck bestrebt ist, den Rollenzapfen gegen den hydrostatischen Druck des Metallbades aus dem Lagergehäuse herauszudrücken. Diese Kraft berechnet sich als Produkt aus der Differenz des Innendrucks zum hydrostatischen Druck und der Querschnittsfläche des Rollenzapfens im Bereich der Durchführung. Diese pneumatische Andruckkraft hat den Vorteil, keinen zusätzlichen Bauraum zu beanspruchen und gewährleistet, daß sich die Dichtungsflächen berühren und der Rollenzapfen axial in Position bleibt. Verschleiß im Bereich der Dichtungsflächen führt zu einer axialen Nachstellung des Rollenzapfens. Die Laufflächen des Lagers müssen entsprechend eine axiale Verschiebung des Rollenzapfens zulassen.

Wenn der Innendruck höher ist als der hydrostatische Druck im flüssigen Metall, bildet er eine zusätzliche Sicherung. Wenn es nämlich beispielsweise verschleißbedingt im Bereich der Dichtungsflächen zu Undichtigkeiten kommt, tritt aufgrund des Innendrucks kein flüssiges Metall ein, sondern es tritt Gas aus, dessen Volumenstrom durch eine enge Ausführungsform des Ringspaltes zwischen Rolle und Lagergehäuse klein gehalten wird.

Gemäß einer Weiterbildung ist vorgesehen, daß zwischen den Dichtungsflächen von Rollenabsatz und Lagergehäuse eine Ringscheibe aus Dichtungsmaterial angeordnet ist, die über den Rollenabsatz gegen die Dichtungsflächen am Lagergehäuse gedrückt wird. Diese Ausbildung hat den Vorteil, daß die Ringscheibe als Verschleißteil ausgebildet und bei Bedarf einfach ausgewechselt werden kann. Die Ringscheibe kann mit der Rolle verbunden sein, so daß sie mit der Rolle mitdreht. In diesem Fall tritt Verschleiß lediglich zwischen der Ringscheibe und dem Lagergehäuse auf. Alternativ ist es möglich, die Ringscheibe mit dem Lagergehäuse zu verbinden, so daß die Ringscheibe stillsteht und damit Verschleiß lediglich zwischen Ringscheibe und Rollenabsatz auftritt. Gemäß einer bevorzugten Ausführungsform ist allerdings die Ringscheibe beispielsweise durch Mitnehmerstifte an den Käfig eines Wälzlagers gekoppelt, wodurch er im Betrieb mitdreht, so daß es zu einer gleichmäßigen Belastung der beiden Dichtungsflächen kommt.

Die Ringscheibe besteht vorzugsweise aus Keramik, was den Vorteil hat, daß sie inert bezüglich des flüssigen Metalls ist. Die Reibung zwischen der Keramikoberfläche geringster Rauhigkeit und dem Dichtpartner ist weitgehend verschleißfrei. Ein Fressen, wie es beim Kontakt zweier metallischer Oberflächen möglich ist, kann somit ausgeschlossen werden.

Bei einer alternativen Ausführungsform der Erfindung ist vorgesehen, daß die Dichtungsflächen von Rollenabsatz und Lagergehäuse auf beiden Seiten des zwischen Lagergehäuse und Rolle gebildeten Ringspalts vorgesehen sind und ein Dichtungselement vorgesehen ist, das unter Abdichtung des Ringspaltes gleichzeitig gegen beide Dichtungsflächen gedrückt wird, wobei das Dichtungselement mit dem Wälzlagerkäfig gekoppelt ist, so daß das Dichtungselement im Betrieb sowohl gegenüber dem Rollenzapfen als auch gegenüber dem Lagergehäuse gedreht wird. Bei dieser Ausführungsform werden die Dichtungsflächen an Lagergehäuse und Rolle also nicht gegeneinander gedrückt wie bei den zuvor beschriebenen Ausführungsformen, sondern die beiden Dichtungsflächen dichten den Ringspalt jeweils zu einer Seite radial nach innen bzw. radial nach außen durch das Zusammenwirken mit dem Dichtungselement ab. Durch die Koppelung mit dem Käfig des Wälzlagers wird dabei erreicht, daß sowohl zwischen dem Dichtungselement und dem Lagergehäuse als auch zwischen dem Dichtungselement und Rolle Relativbewegungen auftreten, wodurch ein ungleichmäßiger Abrieb an den Dichtungsflächen weitgehend vermieden werden kann.

Die für das Anpressen des Dichtungselements erforderliche Druckkraft kann beispielsweise durch Federelemente erzeugt werden. Des weiteren ist es möglich, im Innenraum des Lagergehäuses einen Überdruck zu erzeugen, der mit den zuvor bereits erläuterten weiteren Vorteilen das Dichtungselement zusätzlich gegen die Dichtungsflächen drückt.

Thermisch bedingte axiale Ausdehnungen der Rolle und der damit verbundene zunehmende Abstand der beiden Lagerungen voneinander kann beispielsweise durch eine Anpassung der traversen Spannweite kompensiert werden. Dafür ist gemäß einer Ausführungsform der Erfindung einer der Tragarme an der Traverse schwenkbar aufgehängt und ist des weiteren die Lagergehäuseaußenseite teilweise kugelförmig ausgebildet und in einer komplementär ausgebildeten Aufnahmeschale des Tragarmes angeordnet. Dann gleicht der kugelgelenkartige Sitz die Schwenkbewegung des Tragarmes aus und gewährleistet, daß beide Lagerungen zur Rolle stets fluchten. Auf die gleiche Weise werden auch Wärmeverzüge der Tragarme kompensiert.

Die Sitzfläche der Aufnahmeschale für das teilweise kugelförmige Lagergehäuse ist zu dieser formschlüssig ausgeführt. Über den formschlüssigen Sitz wird die Betriebskraft vom Lagergehäuse auf die Aufnahmeschale in den Tragarm eingeleitet. Der Sitz ist dergestalt ausgeführt, daß die Betriebskraft vom Lagergehäuse innerhalb eines Raumwinkelbereichs flächig von der Aufnahmeschale aufgenommen wird und das Lagergehäuse verzugfrei im Sitz fixiert ist. Die Aufnahmeschale ist zweckmäßigerweise in mehrere, beispielsweise drei, Segmente unterteilt. Ein Verdrehen des Lagergehäuses in der Aufnahmeschale wird verhindert, damit die Druckzuleitung zur Kammer nicht beschädigt wird.

Gemäß einer weiteren Ausführungsform ist vorgesehen, daß das Lagergehäuse in einer Aufnahmeschale axial verschiebbar angeordnet ist. Hierdurch können unterschiedliche Wärmedehnungen kompensiert werden. Ein schwenkbarer Tragarm, wie er bei der zuvor beschriebenen Ausführungsform vorgesehen ist, kann, muß aber nicht vorhanden sein.

Das Lagergehäuse sollte innerhalb der Aufnahmeschale eine gewisse Bewegungsfreiheit besitzen, so daß es sich erst durch die Betriebskraft in der Sitzfläche fixiert. Diese Positionierung sollte nicht eher stattfinden, bis die thermischen Ausgleichsprozesse in der Rolle und in den Tragarmen abgeklungen sind. So wird gewährleistet, daß im Betrieb die Ausrichtung der Lager zur Rolle fluchtend bleibt.

Gemäß einer weiteren Ausführungsform der Erfindung kann die Andruckkraft der berührenden Dichtung zusätzlich erhöht werden, indem der schwenkbar aufgehängte Tragarm mit einer äußeren Kraft nach außen gedrückt wird, wodurch die Dichtungsflächen des Lagergehäuses gegen die Dichtungsflächen des Rollenabsatzes gedrückt werden. Diese äußere Kraft ist unabhängig vom Innendruck und kann erforderlich werden für den Fall, daß der Innendruck kurzzeitig absinkt.

Hinsichtlich weiterer Ausgestaltungsmöglichkeiten der Erfindung wird auf die Unteransprüche sowie die nachfolgende Beschreibung von Ausführungsformen der Erfindung unter Bezugnahme auf die beiliegende Zeichnung verwiesen. In der Zeichnung zeigt
- Figur 1: in schematischer Ansicht eine in ein Metallbad eingetauchte Rollenanordnung gemäß der vorliegenden Erfindung;
- Figur 2: eine erste Ausführungsform einer erfindungsgemäßen Lagerung der Rollenanordnung aus Figur 1;
- Figur 2a: eine Variante der Ausführungsform gemäß Figur 2;
- Figur 3: die Lagerung im Halbschnitt entlang der Linie III-III in Figur 2;
- Figur 4: in Schnittansicht eine zweite Ausführungsform einer erfindungsgemäßen Lagerung für die Rolle der Rollenanordnung aus Figur 1;
- Figur 5: in Schnittansicht eine dritte Ausführungsform einer erfindungsgemäßen Lagerung für die Rolle der Rollenanordnung aus Figur 1;
- Figur 6: in Schnittansicht eine vierte Ausführungsform einer erfindungsgemäßen Lagerung für die Rolle der Rollenanordnung gemäß Figur 1 und
- Figur 7: in Schnittansicht eine fünfte Ausführungsform einer erfindungsgemäßen Lagerung für die Rollenanordnung aus Figur 1.

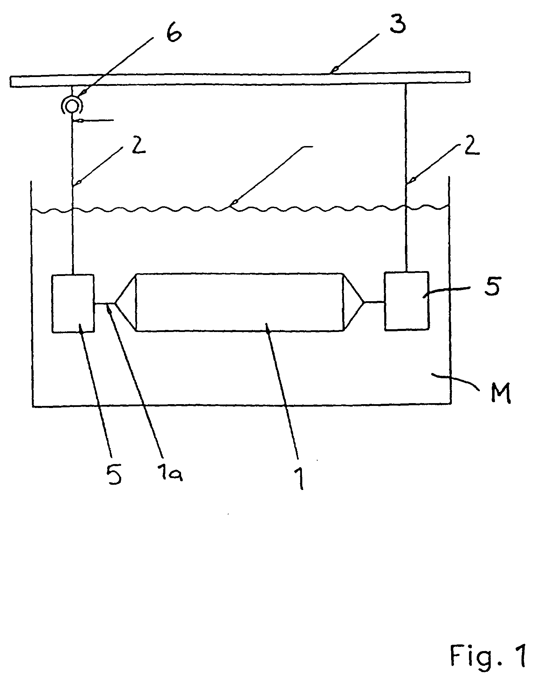

Figur 1 zeigt in schematischer Ansicht eine erfindungsgemäße Rollenanordnung, wie sie bei der kontinuierlichen Beschichtung von Bändern zum Einsatz kommt. Die Rollenanordnung umfaßt eine im Metallbad M umlaufende Rolle 1, die endseitig rotationsfähig an Tragarmen 2 abgestützt ist, die von einer oberhalb des Metallbades M angeordneten Traverse 3 herabragen. Einer der beiden Tragarme 2 ist mit einem Gelenk 6 derart schwenkbar ausgelegt, daß eine thermische Ausdehnung der Rolle 1 ausgeglichen werden kann.

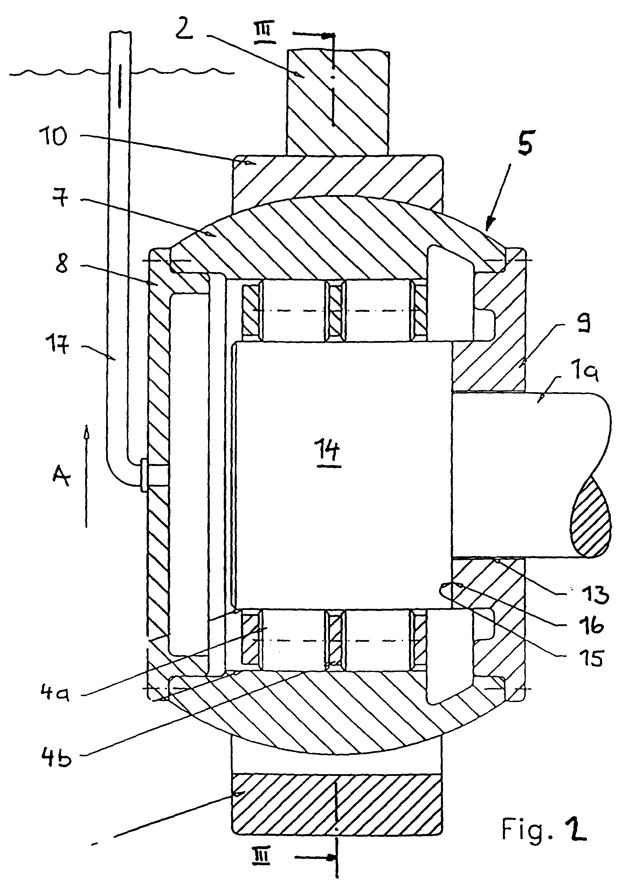

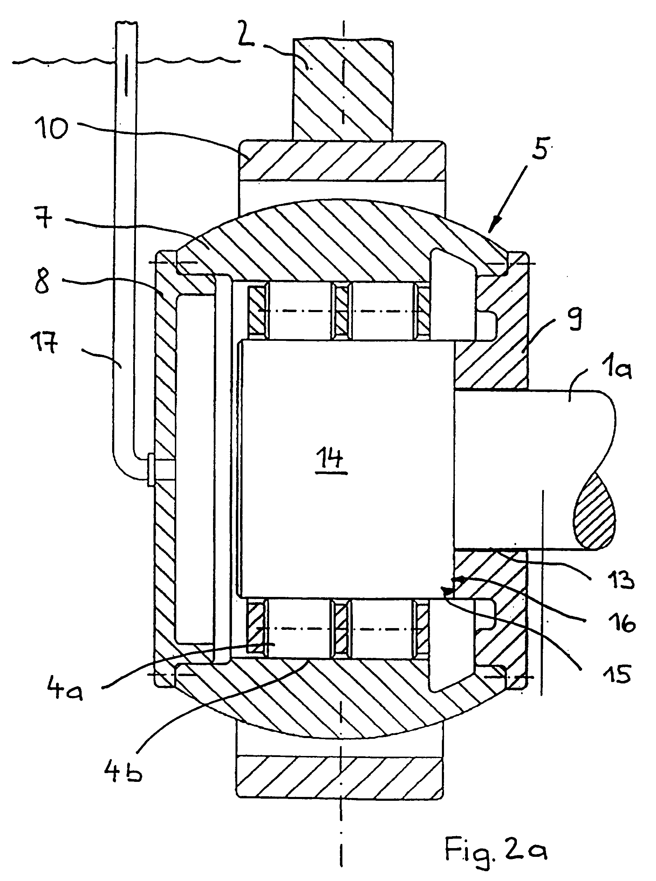

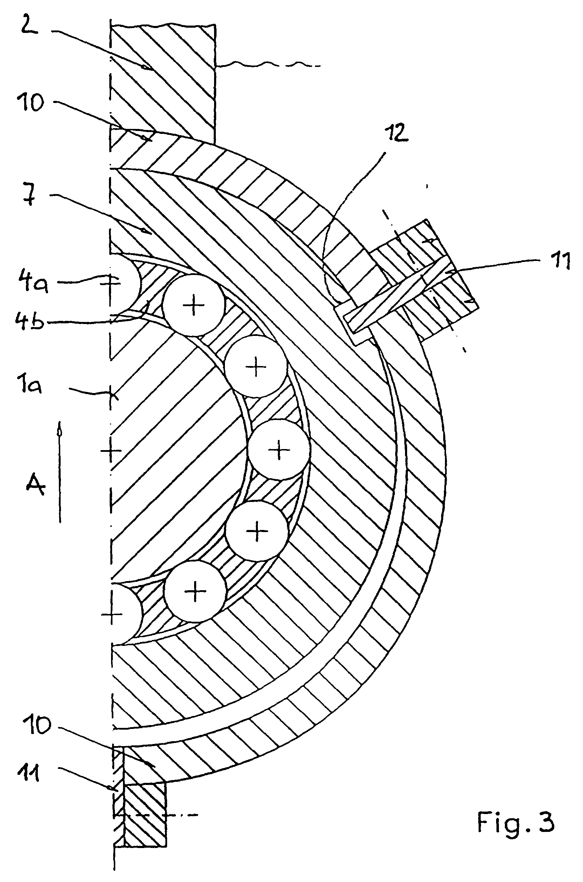

Die Lagerung der Rolle 1 in den Tragarmen 2 erfolgt durch Wälzlager 4 die jeweils in einem gegen das Metallbad M abgedichteten Lagergehäuse 5 angeordnet sind. Wie in den Figuren 2 und 3 dargestellt ist, umfaßt das Lagergehäuse 5 einen ringförmigen Gehäusekörper 7, dessen offene Stirnseiten jeweils durch einen Deckel 8, 9 verschlossen sind. Der Gehäusekörper 7 ist an seinem Außenumfang kugelabschnittförmig ausgebildet und formschlüssig in einer fest mit dem Tragarm 2 verbunden Aufnahmeschale 10 gehalten. Der formschlüssige Sitz ist dergestalt ausgeführt, daß eine Betriebskraft A vom Lagergehäuse 5 innerhalb eines Raumwinkelbereiches flächig von der Aufnahmeschale 10 aufgenommen werden kann und das Lagergehäuse 5 verzugfrei in der Aufnahmeschale 10 fixiert ist. Die Aufnahmeschale 10 besteht aus insgesamt drei Segmenten, von denen in Figur 3 nur zwei Segmente 10a, 10b dargestellt sind. Ein Verdrehen des Lagergehäuses 5 in der Aufnahmeschale 10 wird durch mehrere Sicherungselemente 11, welche die Aufnahmeschale 10 durchgreifen und in Ausnehmungen 12 an der Außenseite des Gehäusekörpers 7 eingreifen, verhindert.

Alternativ kann das Lagergehäuse auch axial verschiebbar in der Aufnahmeschale 10 gehalten sein, um Wärmedehnungen zu kompensieren. In diesem Fall braucht der Tragarm 2 nicht schwenkbar ausgelegt zu sein (Fig. 2a).

Die Innenfläche des Gehäusekörpers 7 und die Außenfläche eines in das Lagergehäuse 5 durch den Deckel 9 eingreifenden Rollenzapfens 1a sind jeweils als Laufflächen ausgeführt, zwischen denen sich von einem Käfig 4b geführte Wälzkörper 4a erstrecken.

Der Rollenzapfen 1a ist im Bereich der Durchführung durch den Deckel 9 so gestaltet, daß sich ein gleichförmiger umlaufender Ringspalt 13 ergibt. Zur Abdichtung dieses Ring-spalts 13 ist an dem Rollenzapfen 1a ein radial nach außen vorstehender Absatz 14 ausgebildet, an dessen nach innen weisender Stirnseite eine Dichtungsfläche 15 ausgebildet ist, die unter Druck an einer entsprechenden Dichtungsfläche 16 an dem Deckel 9 gehalten wird. Der Anpreßdruck kann dabei erzeugt werden, indem der Deckel 9 entsprechend ausgebildet und am Gehäusekörper 7 festgeschraubt ist. Zusätzlich kann bei der dargestellten Ausführungsform der Innenraum des Lagergehäuses 5 mit einem Innendruck beaufschlagt werden. Hierzu mündet eine Gasleitung 17 in das Lagergehäuse 5, um dem Lagergehäuse 5 unter Erzeugung eines Überdruckes Gas zuzuführen und über den Überdruck den radialen Rollenabsatz 14 in Richtung der Dichtungsfläche 16 des Lagergehäuses 5 zu drücken. Der allseitig wirkende Innendruck ist nämlich bestrebt, den Rollenzapfen 1a entgegen des hydrostatischen Drucks des Metallbades M aus dem Lagergehäuse 5 herauszudrücken. Diese Kraft berechnet sich als Produkt aus der Differenz des Innendrucks zum hydrostatischen Druck und der Querschnittsfläche des Rollenzapfens 1a im Bereich der Durchführung. Wenn dieser Innendruck höher ist als der hydrostatische Druck im flüssigen Metall, bildet er zusätzlich noch eine Sicherung gegen den Eintritt von flüssigem Metall, falls es einmal zu Undichtigkeiten im Bereich der Dichtungsflächen 15, 16 kommt. In diesem Fall wird nämlich kein flüssiges Metall eintreten, sondern Gas austreten, dessen Volumenstrom durch eine enge Ausführungsform des Ringspaltes 13 zwischen Rolle 1 und Lagergehäuse 5 klein gehalten werden kann. Der Ringspalt 13 kann zusätzlich noch mit einem Dichtstoff wie beispielsweise einem Hochtemperaturfett abgedichtet sein.

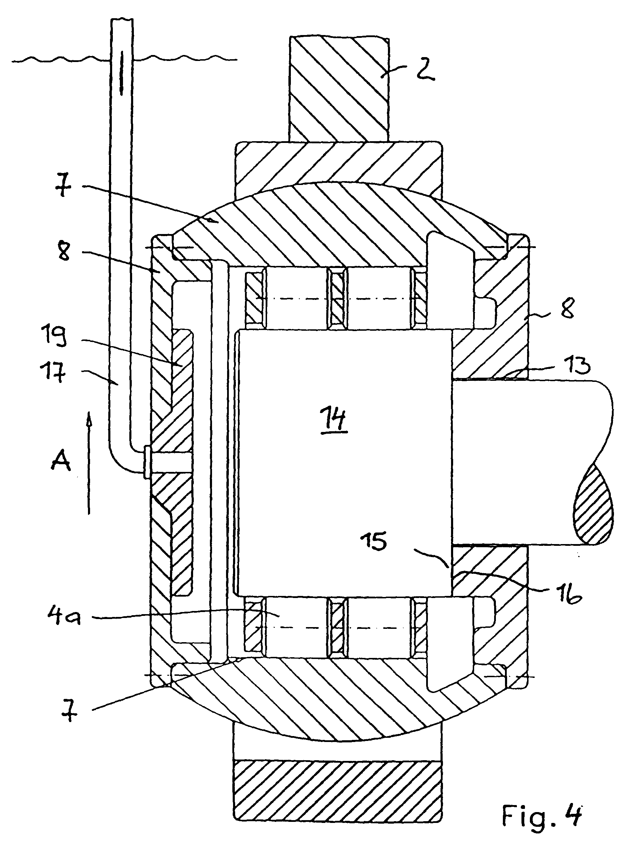

Die Gasleitung 17 kann, wie in Figur 4 dargestellt ist, an eine Drehdurchführung 19 montiert sein. Dann braucht der Gehäusekörper 7 nicht mehr gegen Verdrehung gesichert zu werden, und ein Verschleiß des Gehäusekörpers 7 verteilt sich gleichmäßig auf der gesamten Außenringlauffläche für die Wälzkörper 4a.

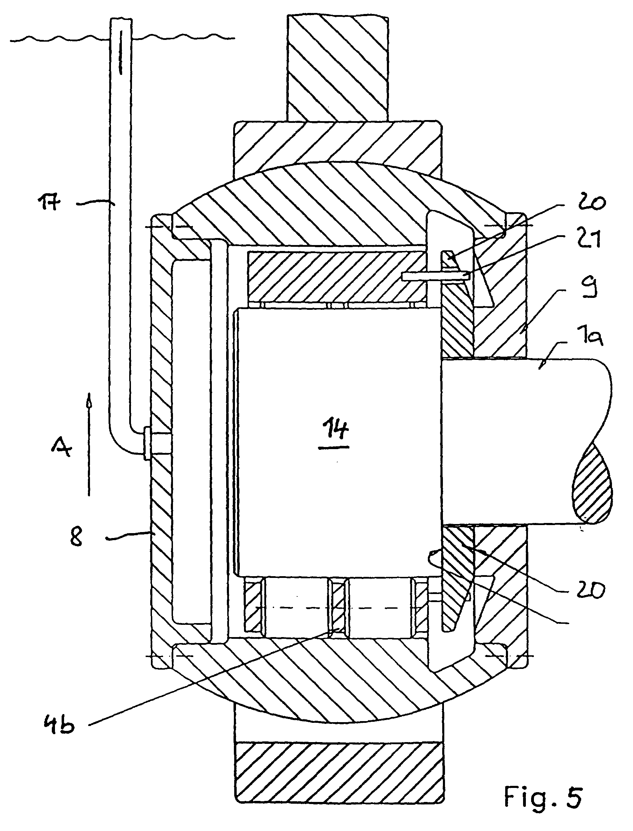

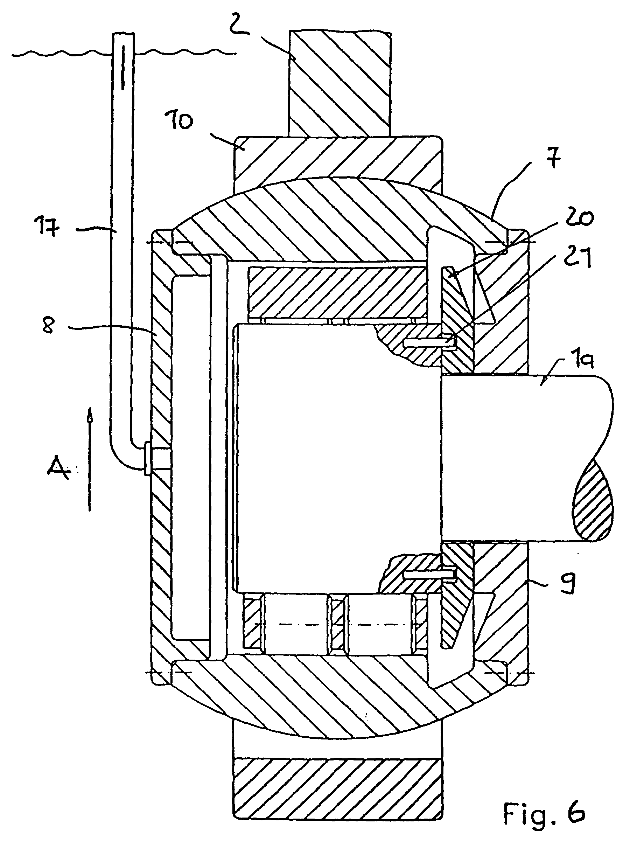

Die Dichtungsflächen 15, 16 an Rollenabsatz 14 und Deckel 9 brauchen nicht direkt miteinander in Kontakt zu stehen, sondern es kann auch ein Dichtungselement 20 zwischengeschaltet sein, wie dies in den Figuren 5 und 6 dargestellt ist. Das Dichtungselement 20, das als Ringscheibe ausgebildet ist, besteht vorzugsweise aus Keramik, was den Vorteil hat, daß sie inert bezüglich des flüssigen Metalls ist. Des weiteren ist die Reibung zwischen der Keramikoberfläche geringster Rauhigkeit und dem Dichtpart weitgehend verschleißfrei. Ein Fressen, wie es beim Kontakt zweier metallischer Oberflächen möglich ist, kann somit ausgeschlossen werden.

Das Dichtungselement 20 ist bei der in Figur 5 dargestellten Ausführungsform mit dem Wälzlagerkäfig 4b durch Mitnehmerstifte 21 gekoppelt. Alternativ ist es aber auch möglich, das Dichtungselement 20 mit der Rolle 1 drehfest zu verbinden, wie dies in Figur 6 gezeigt ist. In diesem Fall findet lediglich zwischen Dichtungselement 20 und Deckel 9 eine Relativbewegung und damit Verschleiß statt.

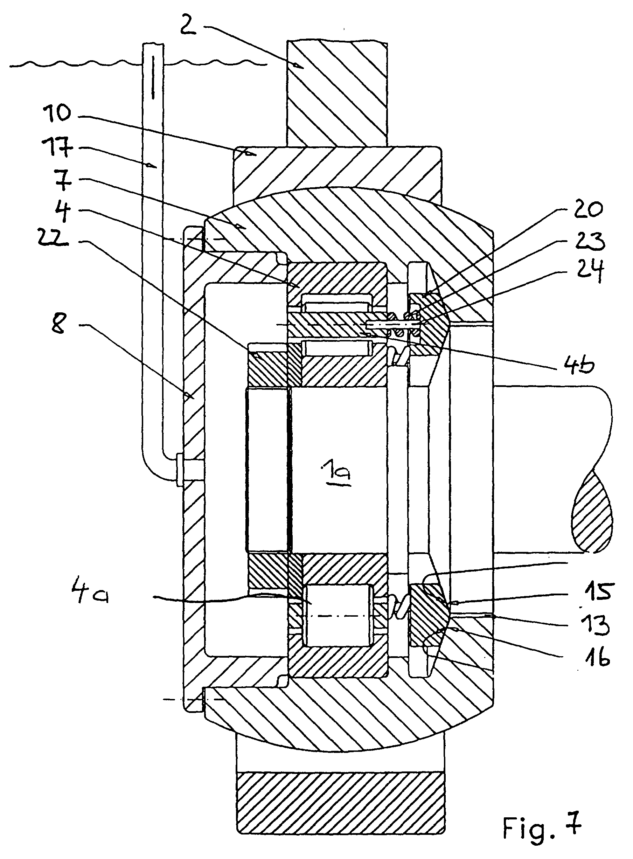

In Figur 7 ist eine weitere Ausführungsform einer erfindungsgemäßen Lagerung der in Figur 1 dargestellten Rollenanordnung dargestellt. Das Lagergehäuse 5 besitzt hier einen ringförmigen Gehäusekörper 7 mit einer sphärischen Mantelfläche, die in einer entsprechend ausgebildeten Aufnahmeschale 10 formschlüssig gehalten ist. In den Gehäusekörper 7 greift von der einen Stirnseite her der Rollenzapfen 1a ein, und die andere Stirnseite ist durch einen Deckel 8 verschlossen. Zur axialen Fixierung des Rollenzapfens 1a ist das Wälzlager 4 als Festlager ausgeführt. Hierzu ist der Außenring des Festlagers 4 mit dem Deckel 8 in dem Gehäusekörper 7 eingespannt. Der Innenring des Wälzlagers 4 ist auf dem Rollenzapfen 1a mit einer Wellenmutter 22 fixiert. Die Wälzkörper 4a des Wälzlagers 4 sind derart in die Laufringe eingepaßt, daß sich ein minimales axiales Spiel ergibt.

Im Bereich der Rollenzapfendurchführung besteht zwischen dem Gehäusekörper 7 und dem Rollenzapfen 1a ein Ringspalt 13, zu dessen Abdichtung ein Dichtungselement 20 vorgesehen ist, das sich an der radialen Außenseite des Ringspalts 13 an eine entsprechende Dichtungsfläche 16 am Gehäusekörper 7 und an der radialen Innenseite des Ringspaltes 13 an eine entsprechende Dichtungsfläche 15 an einem Rollenabsatz 14 unter Druck anlegt. Die Dichtungsflächen 15, 16 erstrecken sich quer zur Rollenachse X und im wesentlichen symmetrisch zum Ringspalt 13, wobei die Dichtungsfläche 16 am Gehäusekörper 7 in Richtung des Ringspaltes 13 eine umlaufende Flanke mit kleiner werdendem Durchmesser aufweist, und die Dichtungsfläche 16 am Rollenabsatz 14 in Richtung des Ringspaltes 13 einen größer werdenden Durchmesser aufweist. Die Dichtungsfläche 15, 16 geben die Gestalt der entsprechenden Dichtungsflächen des Dichtungselement 20 vor. Bei Verschleiß passen sich die Geometrien der miteinander in Berühung kommenden Dichtungsflächen aneinander an.

Das ringförmige Dichtungselement 20 wird durch Federn 23 in axialer Richtung gegen die Dichtflächen 15, 16 von Rollenabsatz 14 und Gehäusekörper 7 gedrückt, wobei die Federelemente 23 jeweils durch Mitnehmerstifte 24 geführt sind, durch welche das Dichtungselement 20 mit dem Wälzlagerkäfig 4b gekoppelt ist.

Über eine Gasleitung 17 kann der Innenraum des Lagergehäuses 5 mit einem Überdruck beaufschlagt werden, so daß bei Undichtigkeit der berührenden Dichtung kein flüssiges Metall in das Lagergehäuse 5 eindringen kann.

## Patentansprüche

1. Rollenanordnung für in einem flüssigen Metallbad zu beschichtendes Behandlungsgut mit einer im Metallbad umlaufenden Rolle (1), die endseitig rotationsfähig an Tragarmen (2) durch Wälzlager (4) gehalten ist, wobei die Wälzlager (4) jeweils in einem gegen das Metallbad (M) abgedichteten Lagergehäuse (5) angeordnet sind, **dadurch gekennzeichnet, daß** zur Abdichtung des Lagergehäuses (5) gegen die Rolle (1) an einem radial vorstehenden Absatz (14) der Rolle (1) und am Lagergehäuse (5) sich quer zur Rollenachse (X) erstreckende Dichtungsflächen (15, 16) ausgebildet sind, die unter Druck aneinander oder an einem zwischengeschalteten Dichtungselement (20) gehalten werden.

2. Rollenanordnung nach Anspruch 1, **dadurch gekennzeichnet, daß** der radiale Absatz (14) an einem in das Lagergehäuse (5) eingreifenden Zapfen (1a) der Rolle (1) vorgesehen ist.

3. Rollenanordnung nach Anspruch 1 oder 2, **dadurch gekennzeichnet, daß** sich die Dichtungsflächen (15, 16) senkrecht zur Rollenachse (X) erstrecken.

4. Rollenanordnung nach einem der Ansprüche 1 bis 3, **dadurch gekennzeichnet, daß** eine Gasleitung (17) in das Lagergehäuse (5) mündet, um dem Lagergehäuse (5) unter Erzeugung eines Überdrucks Gas zuzuführen und über den Überdruck den radialen Rollenabsatz (14) in Richtung der Dichtungsfläche (16) des Lagergehäuses (5) zu drücken.

5. Rollenanordnung nach Anspruch 4, **dadurch gekennzeichnet, daß** die Gasleitung (17) um die Rollenachse (X) drehbar im Lagergehäuse (5) geführt ist.

6. Rollenanordnung nach Anspruch 4 oder 5, **dadurch gekennzeichnet, daß** zwischen den Dichtungsflächen (15, 16) von Rollenabsatz (14) und Lagergehäuse (5) ein Dichtungselement (20), insbesondere eine Ringscheibe aus Keramik, angeordnet ist, das über den Rollenabsatz (14) gegen die Dichtungsfläche (16) am Lagergehäuse (5) gedrückt wird.

7. Rollenanordnung nach Anspruch 6, **dadurch gekennzeichnet, daß** das Dichtungselement (20) mit dem Lagerkäfig (4b) eines Wälzlagers (4), der Rolle (1) oder dem Lagergehäuse (5) verbunden ist.

8. Rollenanordnung nach einem der Ansprüche 1 bis 4, **dadurch gekennzeichnet, daß** die Dichtungsflächen (15, 16) von Rollenabsatz (14) und Lagergehäuse (5) auf gegenüberliegenden Seiten des zwischen Lagergehäuse (5) und Rolle (1) gebildeten Ringspaltes (13) vorgesehen sind und ein Dichtungselement (20) vorgesehen ist, das unter Abdichtung des Ringspalts (13) gleichzeitig gegen beide Dichtungsflächen (15, 16) gedrückt wird, wobei das Dichtungselement (20) mit dem Wälzlagerkäfig (4b) gekoppelt ist, so daß das Dichtungselement (20) im Betrieb sowohl gegenüber dem Rollenzapfen (1a) als auch gegenüber dem Lagergehäuse (5) gedreht wird.

9. Rollenanordnung nach Anspruch 8, **dadurch gekennzeichnet, daß** das Dichtungselement (20) durch die Vorspannkraft wenigstens eines elastischen Elements (23) gegen die Dichtungsflächen (15; 16) gedrückt wird.

10. Rollenanordnung nach Anspruch 8 oder 9, **dadurch gekennzeichnet, daß** das Dichtungselement (20) aus einem Keramikmaterial besteht.

11. Rollenanordnung nach einem der Ansprüche 8 bis 10, **dadurch gekennzeichnet, daß** in dem Lagergehäuse (5) ein Überdruck erzeugbar ist, der das Dichtungselement (20) gegen die Dichtungsflächen (15, 16) drückt.

12. Rollenanordnung nach einem der vorherigen Ansprüche, **dadurch gekennzeichnet, daß** einer der Tragarme (2) schwenkbar gehalten ist.

13. Rollenanordnung nach einem der Ansprüche 1 bis 11, **dadurch gekennzeichnet, daß** das Lagergehäuse (5) in einer Aufnahmeschale (10) axial verschiebbar angeordnet ist.

14. Rollenanordnung nach Anspruch 12 oder 13, **dadurch gekennzeichnet, daß** die Lagergehäuseaußenseite teilweise kugelförmig ausgebildet und in einer geeignet ausgebildeten Aufnahmeschale (10) angeordnet ist.

15. Rollenanordnung nach einem der vorherigen Ansprüche, **dadurch gekennzeichnet, daß** der Ringspalt (13) zwischen Rollenzapfen (1a) und Lagergehäuse (5) durch einen Dichtstoff, insbesondere ein Hochtemperaturfett, abgedichtet ist.

## Claims

1. Roller arrangement for a product to be coated in a molten metal bath, having a roller (1) which rotates in the metal bath and is held at the ends on brackets (2) by anti-friction bearings (4) so as to be able to rotate, the anti-friction bearings (4) in each case being arranged in a bearing housing (5) sealed off from the metal bath (M),
**characterised in that** to seal off the bearing housing (5) from the roller (1), formed on one radially protruding shoulder (14) of the roller (1) and on the bearing housing (5) are sealing surfaces (15, 16) which extend transverse to the roller axis (X) and which are held under pressure against one another or against an interposed sealing element (20).

2. Roller arrangement according to claim 1, **characterised in that** the radial shoulder (14) is provided on a journal (1a) of the roller (1), which journal (1a) engages in the bearing housing (5).

3. Roller arrangement according to claim 1 or 2, **characterised in that** the sealing surfaces (15, 16) extend perpendicular to the roller axis (X).

4. Roller arrangement according to any of claims 1 to 3, **characterised in that** a gas line (17) opens out into the bearing housing (5) in order to supply gas to the bearing housing (5) while at the same time generating an overpressure, and in order to use the overpressure to press the radial shoulder (14) of the roller towards the sealing surface (16) of the bearing housing (5).

5. Roller arrangement according to claim 4, **characterised in that** the gas line (17) is set in the bearing housing (5) in a manner enabling it to rotate about the roller axis (X).

6. Roller arrangement according to claim 4 or 5, **characterised in that** disposed between the sealing surfaces (15, 16) of the roller's shoulder (14) and the bearing housing (5) is a sealing element (20), more particularly a ceramic annular disk, which is pressed via the roller's shoulder (14) against the sealing surface (16) on the bearing housing (5).

7. Roller arrangement according to claim 6, **characterised in that** the sealing element (20) is joined to the bearing cage (4b) of an anti-friction bearing (4), the roller (1) or the bearing housing (5).

8. Roller arrangement according to any of claims 1 to 4, **characterised in that** the sealing surfaces (15, 16) of the roller's shoulder (14) and bearing housing (15) are provided on opposing faces of the annular gap (13) formed between the bearing housing (5) and the roller (1), and a sealing element (20) is provided which whilst sealing the annular gap (13) is simultaneously pressed against the two sealing surfaces (15, 16), the sealing element (20) being coupled to the anti-friction bearing (4b), with the result that in operation the sealing element (20) is rotated both with respect to the roller journal (1a) and with respect to the bearing housing (5).

9. Roller arrangement according to claim 8, **characterised in that** the biasing force of at least one flexible element (23) presses the sealing element (20) against the sealing surfaces (15; 16).

10. Roller arrangement according to claim 8 or 9, **characterised in that** the sealing element (20) consists of a ceramic material.

11. Roller arrangement according to any of claims 8 to 10, **characterised in that** in the bearing housing (5) an overpressure can be generated which presses the sealing element (20) against the sealing surfaces (15, 16).

12. Roller arrangement according to any of the preceding claims, **characterised in that** one of the brackets (2) is held in a manner enabling it to swivel.

13. Roller arrangement according to any of claims 1 to 11, **characterised in that** the bearing housing (5) is arranged in an axially displaceable manner in a locating shell (10).

14. Roller arrangement according to claim 12 or 13, **characterised in that** the exterior of the bearing housing is partially spherical in construction and is arranged in a suitably constructed locating shell (10).

15. Roller arrangement according to any of the preceding claims, **characterised in that** the annular gap (13) between the roller journal (1a) and the bearing housing (5) is sealed off by a sealant, more particularly a high-temperature grease.

## Revendications

1. Système à rouleau pour un produit traité à revêtir dans un bain métallique liquide, comportant un rouleau (1) en révolution dans le bain métallique et retenu sur des bras de support (2) par l'intermédiaire de paliers de roulement (4), aux extrémités, avec faculté de rotation, lesdits paliers de roulement (4) étant respectivement logés dans un carter de portée (5) dont l'étanchéité est assurée vis-à-vis du bain métallique (M), **caractérisé par le fait que** des surfaces d'étanchement (15, 16), s'étendant transversalement par rapport à l'axe (X) du rouleau et ménagées sur le carter de portée (5) et sur un gradin (14) dépassant radialement dudit rouleau (1), en vue d'assurer l'étanchéité dudit carter de portée (5) vis-à-vis dudit rouleau (1), sont retenues sous pression les unes contre les autres ou contre un élément intercalaire d'étanchement (20).

2. Système à rouleau selon la revendication 1, **caractérisé par le fait que** le gradin radial (14) est prévu sur un tourillon (1a) du rouleau (1), pénétrant dans le carter de portée (5).

3. Système à rouleau selon la revendication 1 ou 2, **caractérisé par le fait que** les surfaces d'étanchement (15, 16) s'étendent perpendiculairement à l'axe (X) du rouleau.

4. Système à rouleau selon l'une des revendications 1 à 3, **caractérisé par le fait qu'**un conduit de gaz (17) débouche dans lé carter de portée (5) afin de délivrer du gaz audit carter de portée (5), par génération d'une surpression, et de pousser le gradin radial (14) du rouleau, sous l'effet de la surpression, en direction de la surface d'étanchement (16) dudit carter de portée (5).

5. Système à rouleau selon la revendication 4, **caractérisé par le fait que** le conduit de gaz (17) est guidé dans le carter de portée (5) avec faculté de rotation autour de l'axe (X) du rouleau.

6. Système à rouleau selon la revendication 4 ou 5, **caractérisé par le fait qu'**un élément d'étanchement (20), en particulier un disque annulaire en céramique interposé entre les surfaces d'étanchement (15, 16) du gradin (14) du rouleau et du carter de portée (5), est poussé, par l'intermédiaire dudit gradin (14) du rouleau, contre la surface d'étanchement (16) ménagée sur ledit carter de portée (5).

7. Système à rouleau selon la revendication 6, **caractérisé par le fait que** l'élément d'étanchement (20) est relié à la cage (4b) d'un palier de roulement (4), au rouleau (1) ou au carter de portée (5).

8. Système à rouleau selon l'une des revendications 1 à 4, **caractérisé par le fait que** les surfaces d'étanchement (15, 16) du gradin (14) du rouleau et du carter de portée (5) sont prévues sur des côtés opposés de l'interstice annulaire (13) réservé entre ledit carter de portée (5) et le rouleau (1) ; et il est prévu un élément d'étanchement (20) qui, tout en assurant l'étanchéité dudit interstice annulaire (13), est simultanément pressé contre les deux surfaces d'étanchement (15, 16), ledit élément d'étanchement (20) étant relié à la cage (4b) du palier de roulement de telle sorte que ledit élément d'étanchement (20) soit animé d'une rotation, en service, aussi bien vis-à-vis du tourillon (1a) du rouleau, que vis-à-vis du carter de portée (5).

9. Système à rouleau selon la revendication 8, **caractérisé par le fait que** l'élément d'étanchement (20) est pressé contre les surfaces d'étanchement (15 ; 16) par la force de précontrainte d'au moins un élément élastique (23).

10. Système à rouleau selon la revendication 8 ou 9, **caractérisé par le fait que** l'élément d'étanchement (20) consiste en un matériau céramique.

11. Système à rouleau selon l'une des revendications 8 à 10, **caractérisé par le fait qu'**il peut être engendré, dans le carter de portée (5), une surpression poussant l'élément d'étanchement (20) contre les surfaces d'étanchement (15, 16).

12. Système à rouleau selon l'une des revendications précédentes, **caractérisé par le fait que** l'un des bras de support (2) est retenu avec faculté de pivotement.

13. Système à rouleau selon l'une des revendications 1 à 11, **caractérisé par le fait que** le carter de portée (5) est logé à coulissement axial dans une coquille réceptrice (10).

14. Système à rouleau selon la revendication 12 ou 13, **caractérisé par le fait que** la face extérieure du carter de portée est partiellement de réalisation sphérique, et est logée dans une coquille réceptrice (10) de réalisation appropriée.

15. Système à rouleau selon l'une des revendications précédentes, **caractérisé par le fait que** l'interstice annulaire (13), entre le tourillon (1a) du rouleau et le carter de portée (5), est rendu étanche grâce à un matériau d'étanchement, en particulier une graisse à haute température.
